# EUROPEAN PATENT APPLICATION

(11) **EP 4 744 510 A1**
(43) Date of publication of application: **20.05.2026**
(21) Application number: 24839811.7
(22) Date of filing: 11.07.2024
(51) Int. Cl.: A23L 33/125, A23L 29/00, A23L 33/12, A23L 33/15, A23L 33/16

(54) **NUTRITIONAL COMPOSITION**

(30) Priority: 12.07.2023 JP 2023114757
(71) Applicant: Nutribase LLC, Tokyo 103-0007 (JP)
(72) Inventor: SATO, Hideaki, Tokyo 103-0007 (JP)
(74) Representative: Weickmann & Weickmann PartmbB
(86) International application number: PCT/JP2024/025131
(87) International publication number: WO 2025/013921

(57) **Abstract**

The present invention provides the following nutritional composition for continuously and easily ingesting and conveniently supplementing nutrients that tend to be lacking in achieving health and development: a nutritional composition containing (A) indigestible polysaccharides, and (B) a fish oil powder and/or (C) a vitamin mix. More particularly, a nutritional composition containing (A) 25% by weight or more and 90% by weight or less, (B) 1% by weight or more and 70% by weight or less, and/or (C) 0.1% by weight or more and 15% by weight or less, relative to the total amount of the composition.

## Description

### [Technical Field]

The present invention relates to nutritional compositions, particularly nutritional compositions to supplement nutrients that tend to be lacking in achieving health and development.

### [Background Art]

To live healthily, humans need to continuously consume the necessary nutrients in proper quantities. This is evident from the "Dietary Reference Intakes for Japanese" (2020 edition, published by the Ministry of Health, Labour and Welfare of Japan) (Non Patent Literature 1), which discloses recommended amounts and tolerable upper intakes of essential nutrients such as carbohydrates, proteins, lipids, vitamins, and minerals. Particular attention must be paid to nutritional status during infancy and growth periods, or the early stages of life. It is known that dietary reference intakes vary in classification and reference values from country to country. For example, the age group classification and physical activity level classification of the "Dietary Reference Intakes (DRIs)" in the United States and the "Dietary Reference Intakes for Chinese" in China are not necessarily the same as those of the dietary reference intakes in Japan. However, the basic concept is the same, and they indicate the reference intake amounts of energy and nutrients to be used as a reference for maintaining and improving health and preventing lifestyle-related diseases.

On the other hand, the proportion of children suffering from a new type of malnutrition, in which the nutrients necessary for development are insufficient, that is, calorie nutrients (carbohydrates and lipids) are enough but important nutrients such as vitamins, minerals, and DHA, as well as dietary fiber are insufficient, is increasing also in Japan. It is becoming increasingly clear that nutrition during growth periods affects future performance, including brain and physical development, and the risk of developing lifestyle-related diseases. Furthermore, it is said that the immature sense of taste in childhood leads to a tendency to be picky eaters and to be biased towards foods that are highly palatable, which is also a cause of new-type malnutrition. It is also known that adults may not be able to pay attention to nutritional balance, which sometimes leads to poor health and the development of lifestyle-related diseases.

Many tablet-shaped supplements exist as a way to supplement or ingest insufficient nutrients, but they pose a problem of difficult ingestion for children who cannot use tablets and elderly people who have difficulty swallowing. One approach to address this issue is to powder nutrients and add them to and consume with meals, but this leads to problems such as difficulty in continuous intake due to their distinctive odor and taste. To deal with this issue, techniques for masking the odor and taste of placenta extract and collagen are known (Patent Literatures 1 and 2). However, it is known that raw materials such as vitamin mix and fish oil powder are difficult to put into practical use due to their distinctive odors and tastes, and there has been a demand for nutritional foods containing them that can be easily taken orally over long periods of time by infants to adults, and that can help people continuously live healthily.

### [Citation List]

### [Patent Literature]

[Patent Literature 1] JP 2018-14962 A
[Patent Literature 2] JP 2012-19764 A

### [Non Patent Literature]

[Non Patent Literature 1] "Dietary Reference Intakes for Japanese" (2020 edition, published by the Ministry of Health, Labour and Welfare of Japan); https://www.mhlw.go.jp/stf/seisakunitsuite/bunya/kenkou_iryou/ke nkou/eiyou/syokuji_kijyun.html

### [Summary of Invention]

### [Technical Problem]

The present invention relates to providing a nutritional composition for continuously and easily ingesting and conveniently supplementing nutrients that tend to be lacking in achieving health and development.

### [Solution to Problem]

The present inventors have conducted intensive studies in an attempt to solve the aforementioned problems and found that a composition that combines indigestible polysaccharides such as indigestible dextrin with fish oil powder and a vitamin mix in a specific ratio suppresses the characteristic odor and taste, and can supplement and fortify nutrients without changing the taste or aroma even when added later to dishes, beverages, sweets, and the like. Based on these findings, they have conducted further studies and completed the present invention.

That is, the present invention provides the following.

[1] A nutritional composition comprising (A) indigestible polysaccharides, and (B) a fish oil powder and/or (C) a vitamin mix.
[1-1] The nutritional composition of [1], wherein the (A) indigestible polysaccharide is at least one selected from the group consisting of indigestible dextrin and cyclodextrin.
[1-2] The nutritional composition of [1-1], wherein the cyclodextrin is α-cyclodextrin.
[1-3] A nutritional composition comprising (A) indigestible dextrin, and (B) a fish oil powder and/or (C) a vitamin mix.
[2] The nutritional composition of any of [1] to [1-3], comprising (A) 25% by weight or more and 90% by weight or less, (B) 1% by weight or more and 70% by weight or less, and/or (C) 0.1% by weight or more and 15% by weight or less.
[3] The nutritional composition of any of [1] to [2], wherein the content of eicosapentaenoic acid (EPA) and/or docosahexaenoic acid (DHA) relative to the total amount of (B) is 2% by weight or more and 100% by weight or less.
[4] The nutritional composition of any of [1] to [3], wherein the total content of vitamin B1, vitamin B2, vitamin B6, vitamin B12, folic acid, vitamin A, and vitamin D relative to the total amount of (C) is 0.5% by weight or more and 50% by weight or less.
[5] The nutritional composition of any of [1] to [4], further comprising (D) calcium.
[6] The nutritional composition of any of [1] to [5], further comprising (E) iron.
[7] The nutritional composition of any of [1] to [6], further comprising (F) zinc.
[8] The nutritional composition of any of [1] to [7], which is in a powder form.
[9] The nutritional composition of any of [1] to [8], which is used for nutritional supplementation or fortification.
[10] The nutritional composition of any of [1] to [8], which is added to food such that the daily intake of the nutritional composition is 0.1 g or more and 15 g or less.
[11] A food comprising the nutritional composition of any of [1] to [8].
[12] A method for nutritionally supplementing or fortifying a food, comprising adding the nutritional composition of any of [1] to [8] to the food.
[13] A method for producing a nutritionally supplemented or fortified food, comprising adding the nutritional composition of any of [1] to [8] to the food.
[14] A method for producing a nutritional composition, comprising a step of adding (A) indigestible polysaccharides, and (B) a fish oil powder and/or (C) a vitamin mix.
[14-1] The production method of [14], wherein the (A) indigestible polysaccharide is at least one selected from the group consisting of indigestible dextrin and cyclodextrin.
[14-2] A method for producing a nutritional composition, comprising a step of adding (A) indigestible dextrin, and (B) a fish oil powder and/or (C) a vitamin mix.
[15] The production method of any of [14] to [14-2], comprising a step of adding (A) 25% by weight or more and 90% by weight or less, (B) 1% by weight or more and 70% by weight or less, and/or (C) 0.1% by weight or more and 15% by weight or less, relative to the total amount of the composition.

### [Advantageous Effects of Invention]

According to the present invention, meals and beverages containing sufficient nutrients can be easily prepared without destroying the flavor or taste of dishes or drink.

According to the present invention, people for whom nutritional intake is highly important, such as children, elderly persons, pregnant women, and persons with illnesses, hard workers, and the like can easily and continuously ingest nutrients in desirable combinations from their everyday meals and beverages.

According to the present invention, it is possible to easily provide merchandise and products that contain sufficient nutrients, without destroying the flavor or taste of existing products and merchandise such as food, beverage, sweets, and the like. The "childhood" refers to the period from birth to puberty (adolescence), and for example, see https://www.mhlw.go.jp/web/t_doc?dataId=00ta0783&dataType=1&page No=1.

### [Description of Embodiments]

The present invention relates to a nutritional composition containing (A) indigestible polysaccharides, and (B) a fish oil powder and/or (C) a vitamin mix (hereinafter abbreviated as the nutritional composition of the present invention). More particularly, it relates to a nutritional composition containing (A) 25% by weight or more and 90% by weight or less, (B) 1% by weight or more and 70% by weight or less, and/or (C) 0.1% by weight or more and 15% by weight or less, relative to the total amount of the composition.

In the present invention, (A) indigestible polysaccharides means indigestible polysaccharides that cannot be digested by human digestive enzymes.

The molecular weight of the indigestible polysaccharides is generally 6,000 or less, preferably 5,000 or less, more preferably 3,000 or less, further preferably 2,000 or less, and the lower limit is 500 or more.

Examples of the indigestible polysaccharides include indigestible dextrin, cyclodextrin, polydextrose, guar gum hydrolysate, gum arabic, cellulose derivatives, arabinose-containing polysaccharides, and inulin. Of these, indigestible dextrin and cyclodextrin are preferred.

In the present invention, the indigestible dextrin is a water-soluble, low-viscosity dietary fiber obtained by adding a small amount of hydrochloric acid to starch such as corn, heating the mixture, treating same with α-amylase and glucoamylase, and separating the resulting dietary fiber fraction. Examples of the aforementioned starch include starch derived from corn, wheat, barley, rice, beans, tubers (potato, sweet potato), or tapioca. Of these, indigestible dextrin obtained from corn is preferred.

The indigestible dextrin may be produced by conventional methods or may be commercially available. Examples of the commercially available product include, but are not limited to, those sold under the trade names "Pine Fiber" and "Fibersol 2" (manufactured by Matsutani Chemical Industry Co., Ltd.), "Okunos Dietary Fiber" (manufactured by Horika Foods Co., Ltd.), and "Nutriose FB06" (manufactured by Rocket Japan Co., Ltd.).

In the present invention, the cyclodextrin is a cyclic oligosaccharide composed of glucose, which is synthesized from starch by enzymatic reaction, as a constitutional unit. Examples of the starch include starch derived from corn, wheat, barley, rice, beans, tubers (potato, sweet potato), or tapioca. Cyclodextrins derived from potato and corn are preferred, and cyclodextrins derived from corn are more preferred. Cyclodextrins are classified into α-, β-, and γ-cyclodextrins based on the ring size. While any cyclodextrin can be used, α-cyclodextrin is preferred.

Cyclodextrin produced by a conventional method may be used, or a commercially available product may be used. Examples of the commercially available product include, but are not limited to, "CAVAMAX (registered trademark)" series (manufactured by CycloChem Co., Ltd.).

In the present invention, the form of (A) the indigestible polysaccharide is not particularly limited, and may be powder, fine granule, granule, etc., and is preferably powder from the viewpoint of solubility in food.

In the present specification, the food means all foods and beverages, including orally available foods and beverages that are consumed orally. Specific examples include general foods, sweets, seasonings, beverages, other manufactured or processed foods, additives, health foods, nutritional supplements, health foods, foods (also referred to as meals) made edible by cooking or processing ingredients, and materials that can be made into food form.

In the present invention, the amount of dietary fiber in the indigestible polysaccharide is not particularly limited, and 85 to 95% by weight of dietary fiber is preferably contained.

More specifically, in the present invention, the amount of dietary fiber in the indigestible dextrin is not particularly limited, and 85 to 95% by weight of dietary fiber is preferably contained.

In the present invention, (B) the fish oil powder is a powder obtained by encapsulating fish oil in carbohydrate, protein, etc., and processing into a powder form. For example, a powder obtained by encapsulating fish oil in cross-linked gelatin can be mentioned.

In the present invention, the fish oil powder contains omega-3 fatty acids such as eicosapentaenoic acid (also abbreviated as EPA) and/or docosahexaenoic acid (also abbreviated as DHA).

In the present invention, EPA in the fish oil powder is generally 2% by weight or more, preferably 2.7% by weight or more, 3% by weight or more, generally 100% by weight or less, preferably 50% by weight or less, more preferably 10% by weight or less.

In the present invention, DHA in the fish oil powder is generally 10% by weight or more, preferably 13.2% by weight or more, more preferably 13.8% by weight or more, and the upper limit is generally 100% by weight or less, preferably 50% by weight or less, more preferably 20% by weight or less.

In the present invention, the total amount of EPA and DHA in the fish oil powder is generally 12% by weight or more, preferably 16% by weight or more, more preferably 16.8% by weight or more. The upper limit is not particularly limited and generally 100% by weight or less, preferably 80% by weight or less, more preferably 30% by weight or less.

In the present invention, (C) the vitamin mix encompasses a collection of individual vitamins or a pre-mixed mixture.

In the present invention, the vitamin mix may contain water-soluble vitamins such as vitamin B1, vitamin B2, vitamin B6, vitamin B12, vitamin C, niacin (vitamin B3), pantothenic acid (vitamin B5), biotin, and folic acid (vitamin B9); or fat-soluble vitamins such as vitamin A, vitamin D, vitamin E (α-tocopherol), and vitamin K.

In particular, the vitamin mix of the present invention preferably contains vitamins that tend to be insufficient and cannot be synthesized in the body, for example, at least vitamin B1, vitamin B2, vitamin B6, vitamin B12, folic acid, vitamin A, and vitamin D.

In the present invention, the total amount of each vitamin in the vitamin mix is not particularly limited, and is generally 0.5% by weight or more, preferably 1% by weight or more, more preferably 2% by weight or more. The upper limit is generally 50% by weight or less, preferably 30% by weight or less, more preferably 15% by weight or less, further preferably 10% by weight or less. The vitamin mix may be prepared by a conventional method, or a commercially available vitamin mix may be used.

The content of each component in the nutritional composition of the present invention is as follows:
(A) indigestible polysaccharides: generally 25% by weight or more and 90% by weight or less, preferably 30% by weight or more and 85% by weight or less, more preferably 40% by weight or more and 80% by weight or less;
(B) fish oil powder: generally 1% by weight or more and 70% by weight or less, preferably 5% by weight or more and 60% by weight or less, more preferably 10% by weight or more and 40% by weight or less;
(C) vitamin mix: generally 0.1% by weight or more and 15% by weight or less, preferably 0.5% by weight or more and 10% by weight or less, more preferably 1% by weight or more and 5% by weight or less.

The content of each component in a specific nutritional composition of the present invention is as follows:
(A) indigestible dextrin: generally 25% by weight or more and 90% by weight or less, preferably 30% by weight or more and 85% by weight or less, more preferably 40% by weight or more and 80% by weight or less;
(B) fish oil powder: generally 1% by weight or more and 70% by weight or less, preferably 5% by weight or more and 60% by weight or less, more preferably 10% by weight or more and 40% by weight or less;
(C) vitamin mix: generally 0.1% by weight or more and 15% by weight or less, preferably 0.5% by weight or more and 10% by weight or less, more preferably 1% by weight or more and 5% by weight or less.

The content of each component in another specific nutritional composition of the present invention is as follows:
(A) cyclodextrin: generally 25% by weight or more and 90% by weight or less, preferably 30% by weight or more and 85% by weight or less, more preferably 40% by weight or more and 80% by weight or less;
(B) fish oil powder: generally 1% by weight or more and 70% by weight or less, preferably 5% by weight or more and 60% by weight or less, more preferably 10% by weight or more and 40% by weight or less;
(C) a vitamin mix: generally 0.1% by weight or more and 15% by weight or less, preferably 0.5% by weight or more and 10% by weight or less, more preferably 1% by weight or more and 5% by weight or less.

The nutritional composition of the present invention may be a two-component composition containing indigestible polysaccharides and either fish oil powder or a vitamin mix. However, it is preferable to contain three components from the viewpoint of maintaining a balance of important nutrients that are statistically lacking in developed countries, including Japan. This constitution suppresses the characteristic odor and taste of the nutritional composition of the present invention. The characteristic odor refers to a fishy or vitamin-like odor, and the characteristic taste refers to bitterness, sourness, sweetness, saltiness, umami, and the like.

In the nutritional composition of the present invention, from the viewpoint of making the composition tasteless and odorless, (A) indigestible polysaccharide is generally 0.2 parts by weight or more and 15 parts by weight or less, preferably 0.3 parts by weight or more and 12 parts by weight or less, more preferably 0.4 parts by weight or more and 11 parts by weight or less, per 1 part by weight of (B) fish oil powder.

Similarly, (A) is generally 3 parts by weight or more and 150 parts by weight or less, preferably 4 parts by weight or more and 120 parts by weight or less, more preferably 5 parts by weight or more and 100 parts by weight or less, per 1 part by weight of (C) vitamin mix.

More specifically, in the nutritional composition of the present invention, from the viewpoint of making the composition tasteless and odorless, (A) indigestible dextrin is generally 0.2 parts by weight or more and 15 parts by weight or less, preferably 0.3 parts by weight or more and 12 parts by weight or less, more preferably 0.4 parts by weight or more and 11 parts by weight or less, per 1 part by weight of (B) fish oil powder.

Similarly, (A) indigestible dextrin is generally 3 parts by weight or more and 150 parts by weight or less, preferably 4 parts by weight or more and 120 parts by weight or less, more preferably 5 parts by weight or more and 100 parts by weight or less, per 1 part by weight of (C) vitamin mix.

further specifically, in the nutritional composition of the present invention, from the viewpoint of making the composition tasteless and odorless, (A) cyclodextrin is generally 0.2 parts by weight or more and 15 parts by weight or less, preferably 0.3 parts by weight or more and 12 parts by weight or less, more preferably 0.4 parts by weight or more and 11 parts by weight or less, per 1 part by weight of (B) fish oil powder.

Similarly, (A) cyclodextrin is generally 3 parts by weight or more and 150 parts by weight or less, preferably 4 parts by weight or more and 120 parts by weight or less, more preferably 5 parts by weight or more and 100 parts by weight or less, per 1 part by weight of (C) vitamin mix.

From the viewpoint of the problem of insufficient intake among people in developed countries, particularly Japan, it is preferable that the nutritional composition of the present invention further contains (D) calcium. The type of calcium is not particularly limited as long as it can be added to foods. Examples include naturally derived raw materials such as seashell calcium, dolomite, eggshell calcium, coral calcium, and fish calcium. From the viewpoint of calcium purity, calcium derived from seashells is preferred. See, for example, https://www.nc-corporation.co.jp/Product/Mineral.html.

The content of calcium in the nutritional composition of the present invention is generally 2% by weight or more and 20% by weight or less, preferably 4% by weight or more and 15% by weight or less, more preferably 6% by weight or more and 10% by weight or less, calculated as free calcium form.

The nutritional composition of the present invention preferably further contains (E) iron, from the viewpoint of the need for nutritional supplementation due to the tendency toward insufficiency in developed countries. The type of iron is not particularly limited as long as it can be added to foods. Examples include insoluble iron such as ferric pyrophosphate; soluble iron such as ferric chloride, sodium ferrous citrate (sodium ferrous citrate), ferric citrate, ammonium ferrous citrate, ferrous gluconate, ferrous lactate, and ferrous sulfate; and organic iron such as heme iron, ferritin, and lactoferrin. However, since many of these have a strong iron-like flavor, insoluble iron, which is considered to have a relatively small iron-like flavor, is preferred, and ferric pyrophosphate is more preferred. See, for example, https://www.saneigenffi.co.jp/product/solution/f26bf01d30f0e6db 955e17970ab4987a86b16c03.html.

The content of iron in the nutritional composition of the present invention is generally 0.002% by weight or more and 0.2% by weight or less, preferably 0.007% by weight or more and 0.15% by weight or less, more preferably 0.01% by weight or more and 0.1% by weight or less, calculated as free iron form.

In the nutritional composition of the present invention, it preferably contains (F) zinc, which plays a role in the constitution of enzymes and activation of enzymatic reactions in the body, the regulation of hormone synthesis and secretion, DNA synthesis, protein synthesis, and the regulation of immune responses, and is known as a nutrient essential for the growth and maintenance of the body. Zinc is also known as an "essential trace mineral" that cannot be produced in the body, and is a nutrient essential for the growth and maintenance of the body. The form of zinc is not particularly limited as long as it can be added to foods. Examples include zinc gluconate, zinc oxide, zinc sulfate hydrate, and zinc yeast, and zinc yeast is preferred from the viewpoint of absorption rate in the body. See, for example, https://www.medience.jp/products/zinc-yeast/.

The content of zinc in the nutritional composition of the present invention is generally 0.001% by weight or more and 1% by weight or less, preferably 0.01% by weight or more and 0.8% by weight or less, more preferably 0.1% by weight or more and 0.5% by weight or less, calculated as free zinc.

In the nutritional composition of the present invention, (G) protein may also be contained, which is known to be a nutrient necessary for physical growth, brain development, and health maintenance. The form of the protein is not particularly limited as long as it can be added to foods. Examples include animal and plant proteins such as milk casein, soy protein, wheat gluten, beef protein, fish protein, rice protein, and corn protein, isolates and concentrates thereof, and whey, which is an aqueous solution obtained by removing milk fat and casein from milk or cow's milk, and isolates and concentrates thereof. Of these, whey is preferred from the viewpoint of amino acid score. Protein is a constituent component thereof and may be any of the 20 amino acids that are biological components. Particularly, the essential amino acids isoleucine, leucine, lysine, methionine, phenylalanine, threonine, tryptophan, valine, and histidine are preferred.

The content of protein and amino acid in the nutritional composition of the present invention is generally 20% by weight or more and 70% by weight or less, preferably 30% by weight or more and 65% by weight or less, more preferably 40% by weight or more and 60% by weight or less, calculated as free form of protein and amino acid.

In the nutritional composition of the present invention, the proportion of components other than (A) to (G) contained in the composition of the present invention is 30% by weight or less, preferably 20% by weight or less, more preferably 10% by weight or less, further preferably substantially free, and particularly preferably free, relative to the total amount of the composition. "Substantially free" means a content of 0.2% by weight or less, preferably 0.1% by weight or less, more preferably 0.05% by weight or less.

The nutritional composition of the present invention may contain excipients, binders, bulking agents, lubricants, flow-improving agents, glidants, thickeners, sweeteners, aromatizing agents, emulsifiers, pH adjusters, flavorings, antioxidants, preservatives, colorants, coating agents, and the like, as necessary. Specific ingredients include excipients such as microcrystalline cellulose and crystalline cellulose; binders such as tragacanth, corn starch, gelatin, and polymeric polyvinylpyrrolidone; bulking agents such as corn starch, pregelatinized starch, alginic acid, and dextrin; lubricants such as magnesium stearate; flow-improving agents such as fine silicon dioxide and methylcellulose; glidants such as glycerin fatty acid esters, talc, and polyethylene glycol 6000; thickeners such as sodium carboxymethylcellulose, carboxyvinyl polymer, xanthan gum, and gelatin; sweeteners such as sucrose, lactose, and aspartame; aromatizing agents such as peppermint, vanilla flavor, and cherry or orange flavor; emulsifiers such as monoglycerides, polyglycerol fatty acid esters, sucrose fatty acid esters, lecithin, polyoxyethylene hydrogenated castor oil, and polyoxyethylene monostearate; pH adjusters such as citric acid, sodium citrate, acetic acid, sodium acetate, and sodium hydroxide; flavorings such as aspartame, licorice extract, and saccharin; antioxidants such as erythorbic acid, butylhydroxyanisole, and propyl gallate; preservatives such as sodium benzoate, sodium edetate, sorbic acid, sodium sorbate, methyl parahydroxybenzoate, and butyl parahydroxybenzoate; colorants such as Food Blue No. 1, Food Yellow No. 4, and Food Red No. 2; coating agents such as shellac and sugar, and the like.

The nutritional composition of the present invention can be produced by mixing the indigestible polysaccharides, fish oil powder, and/or vitamin mix with the above-mentioned other ingredients as necessary by using a conventional method.

That is, another embodiment of the present invention is a method for producing a nutritional composition, including a step of adding (A) indigestible polysaccharides, and (B) fish oil powder and/or (C) a vitamin mix. The definitions and preferred ranges of each component are as described above.

The order of addition in this addition step is not particularly limited. In particular, a pre-mixed vitamin mix may be added together with the other components, or the vitamins may be added separately. In addition to the aforementioned addition step, the method may further include a step of mixing the nutritional composition, a sterilization step, or a filling step of filling the nutritional composition into a container before or after the aforementioned sterilization step. The container may be, for example, a paper pack, plastic bag, plastic bottle, plastic cup, aluminum pouch, metal can, or glass container.

The form of the nutritional composition of the present invention is not particularly limited as long as it is suitable for addition to food. Examples include powder, granules, fine grains, paste, jelly, liquid, capsules, tablets, and the like. Among these, a powder form is preferred from the viewpoint of versatile use in daily life and storage stability.

The nutritional composition of the present invention can be ingested to obtain an appropriate dosage within the prescribed range. The timing of ingestion is not questioned and may be before meals, after meals, or between meals.

The subjects who ingests the nutritional composition of the present invention are not particularly limited, and include subjects who are adversely affected by or expected to be adversely affected by nutritional deficiency, such as infants, elderly people, pregnant women, and sick individuals, including domestic animals.

The nutritional composition of the present invention is used for nutritional supplementation or fortification.

As used herein, "nutritional supplementation" is a concept including supplementation of nutrients that are deficient from the standard value, to reach the standard value. "Nutritional fortification" is a concept including supplementation of nutrients to or above the standard value for the purposes of fatigue recovery, disease cure, or prevent developmental delay. Here, the standard value is set forth in the "Dietary Reference Intakes for Japanese" and determined in detail based on age, gender, body weight, basal metabolic rate, exercise volume, and the like.

As a method for supplementing or fortifying nutrition, the nutrition can be supplemented or fortified by adding the nutritional composition of the present invention to food in an amount appropriate for the purpose and ingesting the food.

Foods to which the composition can be added include dairy products such as lactic acid bacteria drinks, milk, fermented milk, butter, cheese, yogurt, processed milk, skim milk, and ice cream; protein drinks; frozen desserts such as sherbet; juices, soft drink, tea; meat products such as ham, sausage, and hamburger steak; fish paste products such as kamaboko, chikuwa, and satsumaage; egg products such as tamagoyaki (rolled omelet), dashi omelet, and egg tofu; sweets such as pancake, hotcake, cookies, jelly, chewing gum, candy, and snacks; bread; noodles such as pasta and fried udon; gratin; soups; okonomiyaki (savory pancakes) and takoyaki (octopus balls); and seasonings. The nutritional composition of the present invention can be ingested by adding to foods, for example, it can be added to finished pasta and mixed thoroughly, added when kneading hamburger steak, added to beaten eggs for tamagoyaki (rolled omelet), added to pancake batter, added to okonomiyaki batter, added to yogurt or milk before eating, or dissolved in liquid together with protein (powder).

Although it varies depending on age, gender, body weight, basal metabolic rate, amount of exercise, disease state, and the like, the nutrition can be supplemented or fortified by ingesting the nutritional composition of the present invention in an amount of generally 0.1 g or more and 15 g or less, preferably 0.3 g or more and 10 g or less, more preferably 0.5 g or more and 8 g or less per day in addition to an average meal. This amount can be divided into three meals or added to one meal. When water-soluble vitamins, etc. are included, it is preferable to ingest them in three or more meals from the viewpoint of retention in the body.

Specifically, for example, infants aged 2 years or older and under 6 years generally ingest 0.1 g or more and 10 g or less, preferably 0.5 g or more and 8 g or less, more preferably 1 g or more and 5 g or less, per day.

Children aged 6 years or older and under 14 years generally ingest 0.1 g or more and 12 g or less, preferably 0.5 g or more and 9 g or less, more preferably 1 g or more and 6 g or less, per day.

Furthermore, adults aged 14 years old and older generally ingest 0.5 g or more and 15 g or less, preferably 1 g or more and 12 g or less, more preferably 3 g or more and 10 g or less, per day.

The nutritional composition of the present invention may be individually packaged in unit ingestion amount in order to facilitate calculation of the components upon ingestion. Alternatively, it may be provided in a kit form with a measuring spoon capable of measuring a single dose (e.g., 1 g). Any unit may be selected as the unit dose, for example, 1 g, 2 g, 3 g, etc.

When taking 15 g of protein per day to compensate for a protein deficiency, the unit dose may be, for example, a combination of about 5 g of protein and the nutritional composition of the present invention per meal. The unit dose of protein is generally 1 g or more and 10 g or less, 3 g or more and 8 g or less, or 4 g or more and 6 g or less.

Another embodiment of the present invention is a food containing the nutritional composition of the present invention (sometimes to be abbreviated as "the food of the present invention").

The food is not particularly limited as long as it can contain the nutritional composition of the present invention, and may be in any form, including, for example, dairy products such as lactic acid bacteria drinks, milk, fermented milk, butter, cheese, yogurt, processed milk, skim milk, and ice cream; protein drinks; frozen desserts such as sherbet; juices, soft drink, tea; meat products such as ham, sausage, and hamburger steak; fish paste products such as kamaboko, chikuwa, and satsumaage; egg products such as tamagoyaki (rolled omelet), dashi omelet, and egg tofu; sweets such as pancake, hotcake, cookies, jelly, chewing gum, candy, and snacks; bread; noodles such as pasta and fried udon; gratin; soups; okonomiyaki (savory pancakes) and takoyaki (octopus balls); and seasonings, and may be bottled food, canned food, frozen food, and retort-pouched food thereof.

The food of the present invention can be produced by a conventional method by adding the nutritional composition of the present invention.

When the nutritional composition of the present invention is used as it is as a food, it means health foods ingested with a focus on the specific functions of the present invention (nutritional supplementation, nutritional fortification, etc.), as well as foods for specified health uses and foods with nutrient functions as defined by the Food with Health Function Claims System, and also includes dietary supplements. The amounts of indigestible dextrin, fish oil powder, and vitamin mix contained in the food are preferably those that make the daily intake fall within the same range as the above-mentioned intake amounts in the nutritional composition of the present invention. The form of the nutritional composition of the present invention as a food with health functions is not particularly limited.

The nutritional composition of the present invention can be used to solve various problems relating to nutrition. Examples include nutritional compositions used for the following purposes:
(1) nutritional composition aiming at solving personalized nutritional problems
   Insufficient nutrients are estimated from the past dietary records of individuals or specific groups, and a nutritional composition that satisfies them and uses the present invention is produced.
(2) nutritional composition aiming at correcting nutritional deficiencies in commercial products
   In order to correct nutritional imbalances of commercially available products, insufficient nutrients are calculated and a nutritional composition to be added after packaging is produced.
(3) nutritional composition aiming at nutritional fortification of main food ingredients
   A nutritional composition to be kneaded into raw materials of main foods such as noodles and bread to fortify nutrition.
(4) nutritional composition to be added to seasonings
   By incorporating this composition into seasonings such as salt, sugar, sauce, and paste, the nutrients can be fortified without impairing the flavor and taste.
(5) nutritional fortification composition for white rice
   White rice is a main food for the Japanese, but the nutritional composition thereof is centered on carbohydrates, and white rice has low levels of vitamins and minerals. The composition can be used as a nutritional composition that fortifies nutrition of white rice by adding same when cooking the rice.

In the present invention, the taste, aroma, and texture of the nutritional compositions and foods of the present invention can be evaluated, for example, by sensory evaluation by a specialist panel.

Another embodiment of the present invention is a method for supplementing or fortifying nutrition of food, including adding to food the nutritional composition of the present invention, which contains (A) indigestible polysaccharides, and (B) fish oil powder and/or (C) a vitamin mix.

The amount of nutritional composition to be added to food varies depending on the age and condition of the subject taking the nutritional composition, and the purpose of ingestion, and is determined taking into account the daily intake. For example, it is added to food such that the daily intake is generally 0.1 g or more and 15 g or less, preferably 0.3 g or more and 10 g or less, more preferably 0.5 g or more and 8 g or less. For example, when the aforementioned amount is to be taken in three portions a day, one-third of the aforementioned amount is added to the food.

The method for adding the nutritional composition of the present invention to food can be adapted to the form of the food, such as adding same to foods or incorporating same into ingredients.

The definitions and preferred ranges of each component are as described above.

Another embodiment of the present invention is a method for producing a nutritionally supplemented or fortified food, which includes adding to food the nutritional composition of the present invention, which contains (A) indigestible polysaccharides, and (B) fish oil powder and/or (C) a vitamin mix.

The amount of nutritional composition to be added to food is as described above. The definitions and preferred ranges of each component are as described above.

The present invention is described more specifically in the following Examples, but the present invention is not limited to these examples in any way. In the present specification, "%" denotes "% by weight" unless otherwise specified.

Unless otherwise specified, all raw materials used in the following Examples are commercially available for food use.

### [Example]

### <Preparation of nutritional composition 1>

Nutritional composition 1 was prepared by mixing indigestible dextrin (DEX) with two kinds of vitamin mix, fish oil powder, shellfish calcium, ferric pyrophosphate, and a mixed powder (Mix) of zinc yeast according to the compositional ratios shown in Table 1. While there are various vitamin mixes, two representative types (manufactured by DSM and Riken) were used.

**[Table 1]**

| | | composition (%) |
|---|---|---|
| DEX | indigestible dextrin (DEX)^{*1} | 51.3 |
| Mix | DHA&EPA fish oil powder (16.6 - 22%)^{*2} | 18.4 |
| | vitamin mix (2 kinds)^{*3} | 2.0 |
| | shellfish calcium (38%)^{*4} | 25.0 |
| | ferric pyrophosphate (24.7%)^{*5} | 0.3 |
| | zinc yeast (containing about 10% zinc)^{*6} | 3.0 |

| | | |
|---|---|---|
| *1: indigestible dextrin (Fibersol 2; Matsutani Chemical Industry Co., Ltd.) *2: DHA&EPA-containing fish oil powder (DHA-WP; Maruha Nichiro Corporation) *3: Vitamin Ace Mix (MB-11; Riken Vitamin Co., Ltd.) (Table 2-1) or Vitamin Premix Type (RD-2005; DSM Co., Ltd.) (Table 2-2) *4: shellfish calcium (scallop powder; NC Corporation) *5: ferric pyrophosphate (food additive); Yoneyama Chemical Industry Co., Ltd. *6: zinc yeast 10%; Medience Corporation | | |

**[Table 2-1]**

| | |
|---|---|
| L-ascorbic acid | 36.7 % |
| d-α-tocopherol | 5.0 % |
| nicotinamide | 4.3 % |
| calcium pantothenate | 2.1 % |
| dibenzoylthiamine hydrochloride | 0.78 % |
| pyridoxine hydrochloride | 0.54 % |
| riboflavin | 0.47 % |
| vitamin A fatty acid ester (as vitamin A) | 0.31 % (10,300 IU per 1 g) |
| folic acid | 0.098 % |
| cholecalciferol | 0.0020 % (808 IU per 1 g) |
| cyanocobalamin | 0.00096% |
| gum arabic | 5.9 % |
| sodium L-ascorbate | 0.14 % |
| sorbitan fatty acid ester | 0.063 % |
| sodium citrate | 0.029 % |
| glycerin fatty acid ester | 0.021 % |
| mixed tocopherols | 0.014 % |
| citric acid | 0.0096 % |
| food material | 43.3 % |

**[Table 2-2]**

| component | per daily intake | % by weight |
|---|---|---|
| vitamin A | 750 µg | 0.25% |
| vitamin D | 5 µg | 0.002% |
| vitamin E (as α-tocopherol) | 9 mg | 3% |
| vitamin C | 100 mg | 33.30% |
| vitamin B1 | 1.4 mg | 0.46% |
| vitamin B2 | 1.6 mg | 0.53% |
| vitamin B6 | 1.4 mg | 0.46% |
| vitamin B12 | 2.4 µg | 0.80% |
| niacin | 15 mg | 5% |
| folic acid | 240 µg | 0.08% |
| pantothenic acid | 6 mg | 2% |
| daily intake | 300 mg | 100% |

### Experimental Example 1

### <Preparation of food>

One (380 g) commercially available frozen gratin (shrimp and cheese gratin; Nissui Corporation) thawed in a microwave was mixed with 1 g of nutritional composition 1.

### <Investigation of mixing ratio of vitamin mix and fish oil powder>

Nutritional composition 1 containing indigestible dextrin (DEX) and Mix (vitamin mix, fish oil powder, etc.) based on Table 1 was prepared in the DEX:Mix ratio shown in Table 3, and 1 g of this composition was added to one aforementioned gratin and mixed.

### <Evaluation>

Evaluation was conducted by two persons in charge, and evaluated according to the following criteria (bitterness, sourness, sweetness, saltiness, umami, and flavor). Flavor was evaluated based on the mouth odor, focusing on the fishy and vitamin-like odors peculiar to the raw materials.

Overall evaluation was determined by taking into account the effect on taste and flavor when added to food, as well as practicality, and the degree of discomfort felt by the evaluators. The results are shown in Table 3.

### <Evaluation criteria>

O: no discomfort in the preference
Δ: some discomfort
×: discomfort

Overall evaluation was determined based on the following criteria. The results are shown in Table 3.

### <Overall evaluation criteria>

○: all items are O or Δ is one
Δ: 2 or 3 are Δ
×: Δ is 4 or more or × is one or more

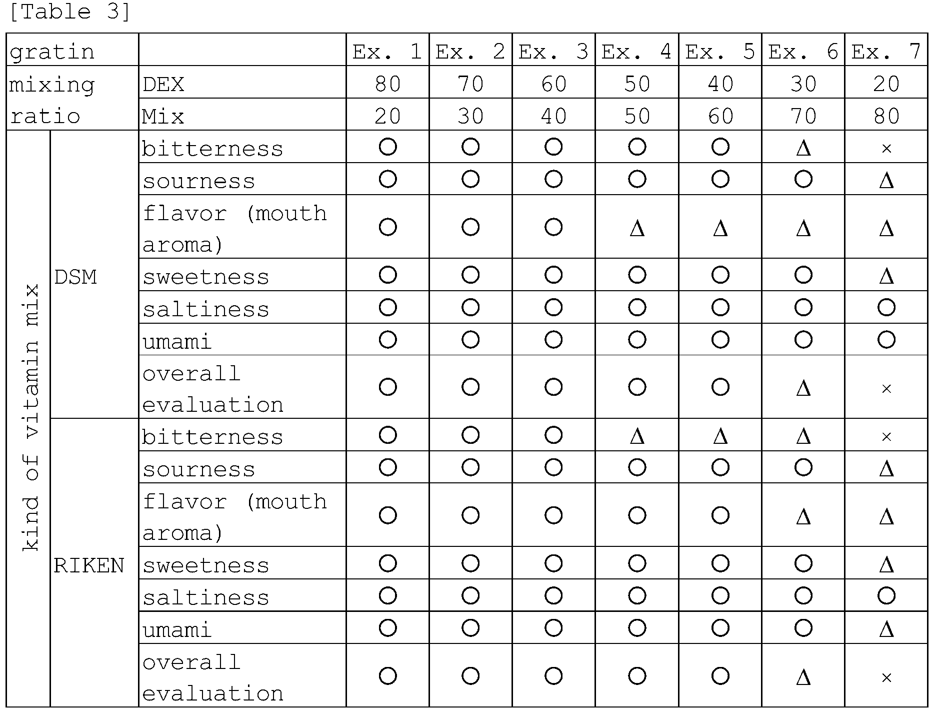

### Experimental Example 2

### <Preparation of food>

One (75 g) commercial yogurt cup (Meiji Bulgaria Yogurt; Meiji Co., Ltd.) was mixed with 1 g of nutritional composition 1.

### <Investigation of mixing ratio of vitamin mix and fish oil powder>

Indigestible dextrin (DEX) and Mix (vitamin mix, fish oil powder, etc.) were mixed based on the composition shown in Table 1 and in the proportions shown in Table 4 to achieve a ratio of 1 g per one yogurt cup.

### <Evaluation>

Evaluation was conducted by two persons in charge, and evaluated according to the same evaluation criteria as in Experimental Example 1. The results are shown in Table 4

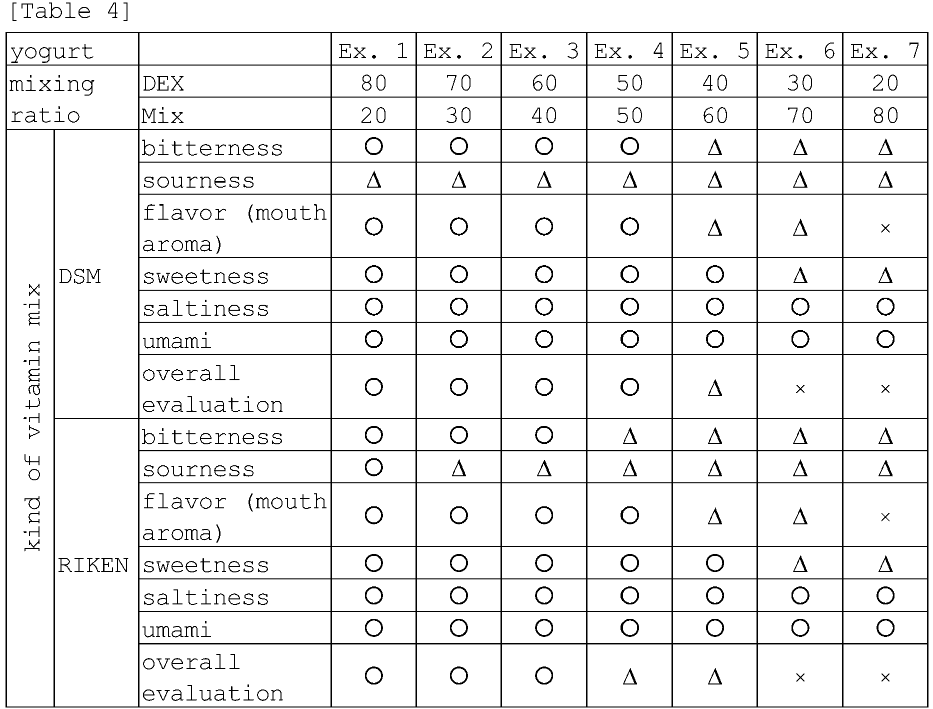

### Experimental Example 3

### <Preparation of food>

One (380 g) commercially available frozen gratin (Shrimp and Cheese Gratin; Nissui Co., Ltd.) thawed in a microwave was mixed with 1 g of nutritional composition 1.

### <Investigation of mixing ratio of vitamin mix and fish oil powder>

Indigestible dextrin (DEX), vitamin mix, and fish oil powder were mixed in the ratio shown in Table 5, and 1 g thereof was added to one (380 g) above-mentioned gratin thawed in a microwave.

### <Evaluation>

Evaluation was performed using the same method as in Experimental Example 1. The results are shown in Table 5.

**[Table 5]**

| gratin | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| mixing ratio | indigestible dextrin (DEX) | 50 | 50 | 50 | 38 | 50 | 50 | 50 | 50 | 0 | 0 |
| | DHA&EPA (16.6 - 22%) | 20 | 30 | 45 | 60 | 20 | 20 | 20 | 20 | 100 | 60 |
| | vitamin mix (DSM) | 2 | 2 | 2 | 2 | 5 | 10 | 15 | 20 | 0 | 0 |
| | correction water | 28 | 18 | 3 | 0 | 25 | 20 | 15 | 10 | 0 | 40 |
| sensual evaluation results | bitterness | ○ | ○ | ○ | ○ | ○ | Δ | Δ | Δ | ○ | ○ |
| | sourness | ○ | ○ | ○ | ○ | ○ | ○ | ○ | Δ | ○ | ○ |
| | flavor (mouth aroma) | ○ | ○ | ○ | ○ | ○ | ○ | Δ | × | × | Δ |
| | sweetness | ○ | ○ | ○ | ○ | ○ | ○ | ○ | ○ | ○ | ○ |
| | saltiness | ○ | ○ | ○ | ○ | ○ | ○ | ○ | ○ | ○ | ○ |
| | umami | ○ | ○ | ○ | ○ | ○ | ○ | ○ | ○ | ○ | ○ |
| | overall evaluation | ○ | ○ | ○ | ○ | ○ | ○ | Δ | × | × | ○ |

### Experimental Example 4

### <Preparation of food>

One (75 g) commercially available yogurt cup (Meiji Bulgaria Yogurt; Meiji Co., Ltd.) was mixed with 1 g of nutritional composition 1.

### <Investigation of mixing ratio of vitamin mix and fish oil powder>

Indigestible dextrin (DEX), vitamin mix, and fish oil powder were mixed in the ratio shown in Table 6, and 1 g thereof was added to one yogurt cup.

### <Evaluation>

Evaluation was performed using the same method as in Experimental Example 1. The results are shown in Table 6.

**[Table 6]**

| yogurt | | Ex. 1 | Ex. 2 | Ex. 3 | Ex. 4 | Ex. 5 | Ex. 6 |
|---|---|---|---|---|---|---|---|
| mixing ratio | indigestible dextrin (DEX) | 50 | 50 | 50 | 38 | 50 | 50 |
| | DHA&EPA (16.6 - 22%) | 20 | 30 | 45 | 60 | 20 | 20 |
| | vitamin mix (DSM | 2 | 2 | 2 | 2 | 5 | 10 |
| | correction water | 28 | 18 | 3 | 0 | 25 | 20 |
| sensory evaluation results | bitterness | ○ | ○ | ○ | ○ | ○ | Δ |
| | sourness | ○ | ○ | ○ | ○ | ○ | ○ |
| | flavor (mouth aroma) | ○ | ○ | ○ | ○ | ○ | ○ |
| | sweetness | ○ | ○ | ○ | ○ | ○ | ○ |
| | saltiness | ○ | ○ | ○ | ○ | ○ | ○ |
| | umami | ○ | ○ | ○ | ○ | ○ | ○ |
| | overall evaluation | ○ | ○ | ○ | ○ | ○ | ○ |

### <Preparation of nutritional compositions 2 and 3>

Nutritional compositions 2 and 3 were prepared by mixing cyclodextrin (Cyc-DEX) or indigestible dextrin (DEX) with a mixed powder (Mix) of vitamin mix, fish oil powder, shellfish calcium, ferric pyrophosphate, and zinc yeast in the composition proportions shown in Table 7. The vitamin mix was the same vitamin premix type (RD-2005) used in nutritional composition 1.

**[Table 7]**

| | nutritional composition 2 | nutritional composition 3 | composition (%) |
|---|---|---|---|
| DEX | cyclodextrin (Cyc-DEX)^{*1A} | indigestible dextrin (DEX)^{*1} | 51.3 |
| Mix | DHA&EPA fish oil powder (16.6 - 22%)^{*2} | | 18.4 |
| | vitamin mix^{*3A} | | 2 |
| | shellfish calcium (38%)^{*4} | | 25 |
| | ferric pyrophosphate (24.7%)^{*5} | | 0.3 |
| | zinc yeast (containing about 10% zinc)^{*6} | | 3 |

| | | | |
|---|---|---|---|
| *1: indigestible dextrin (Fibersol 2; Matsutani Chemical Industry Co., Ltd.) *1A: cyclodextrin (CAVAMAX (registered trademark) W6 Food; CycloChem Co., Ltd.) *2: DHA&EPA-containing fish oil powder (DHA-WP; Maruha Nichiro Corporation) *3A: Vitamin Premix Type (RD-2005; DSM Co., Ltd.) *4: shellfish calcium (scallop powder; NC Corporation) *5: ferric pyrophosphate (food additive); Yoneyama Chemical Industry Co., Ltd. *6: zinc yeast 10%; Medience Corporation | | | |

### Experimental Example 5

### <Preparation of food>

One (380 g) commercially available frozen gratin (shrimp and cheese gratin; Nissui Corporation) thawed in a microwave was mixed with 1 g of nutritional composition 2 or 3.

### <Evaluation>

Evaluation was conducted by a three-person panel using the same method as in Experimental Example 1. The results are shown in Table 8.

**[Table 8]**

| gratin | nutritional composition 2 | nutritional composition 3 |
|---|---|---|
| bitterness | ○ | ○ |
| sourness | ○ | ○ |
| flavor (mouth aroma) | ○ | ○ |
| sweetness | ○ | ○ |
| saltiness | ○ | ○ |
| umami | ○ | ○ |
| overall evaluation | ○ | ○ |

### Experimental Example 6

### <Preparation of food>

One (75 g) commercially available yogurt cup (Meiji Bulgaria Yogurt; Meiji Co., Ltd.) was mixed with 1 g of nutritional composition 2 or 3.

### <Evaluation>

Evaluation was conducted by a three-person panel using the same method as in Experimental Example 1. The results are shown in Table 9.

**[Table 9]**

| yogurt | nutritional composition 2 | nutritional composition 3 |
|---|---|---|
| bitterness | ○ | ○ |
| sourness | ○ | ○ |
| flavor (mouth aroma) | ○ | ○ |
| sweetness | ○ | ○ |
| saltiness | ○ | ○ |
| umami | ○ | ○ |
| overall evaluation | ○ | ○ |

### [Industrial Applicability]

According to the present invention, meals, food, and merchandise containing sufficient nutrients can be easily provided without destroying the flavor or taste of dishes or drink.

According to the present invention, health disorders and developmental disorders caused by nutritional deficiency in children to adults can be eliminated or improved.

According to the present invention, people for whom nutritional intake is highly important, such as children, elderly persons, pregnant women, and persons with illnesses, hard workers, and the like can easily and continuously ingest nutrients in desirable combinations from their everyday meals and beverages.

This application is based on a patent application No. 2023-114757 filed in Japan, the contents of which are encompassed in full herein.

## Claims

1. A nutritional composition comprising (A) indigestible polysaccharides, and (B) a fish oil powder and/or (C) a vitamin mix.

2. The nutritional composition according to claim 1, wherein the (A) indigestible polysaccharide is at least one selected from the group consisting of indigestible dextrin and cyclodextrin.

3. The nutritional composition according to claim 2, wherein the cyclodextrin is α-cyclodextrin.

4. The nutritional composition according to claim 1 or 2, comprising (A) 25% by weight or more and 90% by weight or less, (B) 1% by weight or more and 70% by weight or less, and/or (C) 0.1% by weight or more and 15% by weight or less.

5. The nutritional composition according to claim 1 or 2, wherein the content of eicosapentaenoic acid (EPA) and/or docosahexaenoic acid (DHA) relative to the total amount of (B) is 2% by weight or more and 100% by weight or less.

6. The nutritional composition according to claim 1 or 2, wherein the total content of vitamin B1, vitamin B2, vitamin B6, vitamin B12, folic acid, vitamin A, and vitamin D relative to the total amount of (C) is 0.5% by weight or more and 50% by weight or less.

7. The nutritional composition according to claim 1, further comprising (D) calcium.

8. The nutritional composition according to claim 1, further comprising (E) iron.

9. The nutritional composition according to claim 1, further comprising (F) zinc.

10. The nutritional composition according to claim 1 or 2, which is in a powder form.

11. The nutritional composition according to claim 1 or 2, which is used for nutritional supplementation or fortification.

12. The nutritional composition according to claim 1 or 2, which is added to food such that the daily intake of the nutritional composition is 0.1 g or more and 15 g or less.

13. A food comprising the nutritional composition according to claim 1 or 2.
